# EUROPÄISCHE PATENTSCHRIFT

(11) **EP 3 227 567 B1**
(45) Veröffentlichungstag und Bekanntmachung des Hinweises auf die Patenterteilung: **03.06.2020**
(21) Anmeldenummer: 15798068.1
(22) Anmeldetag: 20.11.2015
(51) Int. Cl.: F16B 5/02, F16B 1/00

(54) **VERSPANNUNGSANORDNUNG EINES ERSTEN BAUTEILS UND EINES ZWEITEN BAUTEILS**
BRACING ARRANGEMENT FOR A FIRST COMPONENT AND A SECOND COMPONENT
DISPOSITIF DE CONTRACTION D'UN PREMIER ÉLÉMENT STRUCTURAL ET D'UN SECOND ÉLÉMENT STRUCTURAL

(30) Priorität: 02.12.2014 DE 102014224606
(43) Veröffentlichungstag der Anmeldung: 11.10.2017
(73) Patentinhaber: Voith Patent GmbH, 89522 Heidenheim (DE)
(72) Erfinder: RUDOLPH, Ralph, 87549 Rettenberg (DE); PRAUSE, Nico, 87509 Stein i.A. (DE)
(74) Vertreter: Voith Patent GmbH - Patentabteilung
(86) Internationale Anmeldenummer: PCT/EP2015/077189
(87) Internationale Veröffentlichungsnummer: WO 2016/087228

(56) Entgegenhaltungen:
- EP-A1- 1 273 766
- US-A- 5 497 616
- US-A- 5 807 052

## Beschreibung

Die Erfindung betrifft eine Verspannungsanordnung eines ersten Bauteils und eines zweiten Bauteils aneinander. Insbesondere dient die Verspannungsanordnung zum Verbinden eines Getriebes und eines Verdichtergehäuses, welche im Betrieb großen Temperaturunterschieden unterliegen.

Allgemein bekannt sind Verspannungsanordnungen, bei denen zwei Bauteile aneinander gesetzt und miteinander verschraubt werden, wobei zum Verspannen ein Bolzen einer Schraube durch eine Durchgangsöffnung eines der beiden Bauteile geführt und in dem anderen der Bauteile eingeschraubt ist. Bekannt ist auch ein Verschweißen zweier Bauteile miteinander.

Problematisch sind Verspannungsanordnungen zum Verspannen zweier Bauteile aus Materialien mit unterschiedlichen Wärmeausdehnungskoeffizienten, wenn eines der Materialien wechselnden Temperaturen mit großen Temperaturunterschieden ausgesetzt ist. In diesem Fall entstehen aufgrund unterschiedlicher Wärmeausdehnung der Bauteile im Bereich der Verspannung schwankende, große Spannungen. Diese Spannungen führen zu Materialermüdung der Bauteile und der Verspannungskomponenten und damit zu einer beschränkten Lebensdauer oder zu sofortigem Versagen.

Ausführungen von Verspannungsanordnungen eines ersten Bauteils und eines zweiten Bauteils aneinander, wobei eine Anlagefläche des ersten Bauteils an einer Anlagefläche des zweiten Bauteils anliegt, wobei das erste Bauteil einen ersten Wärmeausdehnungskoeffizienten und das zweite Bauteil einen zweiten Wärmeausdehnungskoeffizienten aufweisen, wobei der erste Wärmeausdehnungskoeffizient und der zweite Wärmeausdehnungskoeffizient zueinander verschieden sind und wobei die Anlageflächen des ersten Bauteils und des zweiten Bauteils im montierten Zustand gleitfähig aneinander anliegen, sind aus den Druckschriften US 5807052 A und US 5497616 vorbekannt.

Der Erfindung liegt daher die Aufgabe zugrunde, eine Verspannungsanordnung eines ersten Bauteils und eines zweiten Bauteils aneinander vorzuschlagen, welche eine verbesserte Verspannung der beiden Bauteile ermöglicht, insbesondere unter Einfluss hoher Temperaturen Spannungen in den Komponenten der Anordnung reduzieren soll und eine Lebensdauer erhöhen soll.

Die erfindungsgemäße Lösung ist durch die Merkmale des Anspruchs 1 und 10 charakterisiert. Vorteilhafte Ausgestaltungen sind in den Unteransprüchen wiedergegeben.

Ermöglicht wird dadurch eine Entkopplung der beiden Bauteile, beispielsweise zweier Metallplatten mit unterschiedlichem Wärmeausdehnungskoeffizient. Die aneinander anliegenden Anlageflächen der beiden Bauteile können im Betrieb bei wechselnden Betriebstemperaturen aneinander gleiten. Dabei wird trotzdem eine feste Montage des zweiten Bauteils relativ zu dem ersten Bauteil insbesondere aus Sicht eines Mittelpunkts des zweiten Bauteils gewährleistet. Durch die aneinander anliegenden Anlageflächen wird zugleich eine Stabilisierung gegen ein Verkippen aus der Montageebene bereitgestellt.

Unter gleitfähig wird insbesondere verstanden, dass die beiden Bauteile im Betrieb eine insbesondere in Verspannungsrichtung feste Verbindung eingehen, welche eine unterschiedliche Ausdehnung der Bauteile seitlich, insbesondere senkrecht zur Verspannungsrichtung ermöglicht.

Erfindungsgemäß ist das erste Bauteil eine Komponente eines Getriebegehäuses und das zweite Bauteil ein Flansch zur Befestigung einer Komponente eines Verdichtergehäuses oder Expandergehäuses als ein drittes Bauteil.

Bei diesen Komponenten handelt es sich üblicherweise um ein erstes Bauteil und ein drittes Bauteil aus verschiedenen Materialien mit unterschiedlichen Anforderungen an deren Wärmeverhalten. Die Verspannungsanordnung über das zweite Bauteil ermöglicht eine Verspannung, die zugleich einen Ausgleich für im Betrieb unterschiedlich auftretende Wärmeausdehnung bietet.

Insbesondere ermöglicht ein solches zwischengesetztes zweites Bauteil eine einfach anpassbare Montagemöglichkeit zum Montieren eines solchen ersten Bauteils und eines solchen dritten Bauteils aneinander, wenn das erste Bauteil und das dritte Bauteil beispielsweise von verschiedenen Herstellern angeboten werden und damit nicht unmittelbar aneinander passend ausgestaltet sind.

Gemäß alternativer Ausgestaltung entfällt ein zwischengesetztes Bauteil. In einem solchen Fall hat dann das zweite Bauteil bereits bevorzugt die konstruktiven und physikalischen Eigenschaften des dritten Bauteils. Das zweite Bauteil ist dann beispielsweise als am Verdichtergehäuse oder Expandergehäuse integrierter Flansch ausgebildet.

Eine Ausgestaltung ist, dass ein drittes / das dritte Bauteil, das am zweiten Bauteil befestigt oder befestigbar ist, einen dritten Wärmeausdehnungskoeffizienten aufweist, der im Bereich von α3 = 9·10⁻⁶·K⁻¹ bis α3 = 20.10⁻⁶·K⁻¹ liegt, insbesondere bevorzugt im Bereich von α3 = 14·10⁻⁶·K⁻¹ bis α3 = 17·10⁻⁶·K⁻¹ liegt.

Eine Ausgestaltung ist, dass das der erste Wärmeausdehnungskoeffizient im Bereich von α1 = 8·10⁻⁶·K⁻¹ bis α1 = 13·10⁻⁶·K⁻¹ liegt, insbesondere der im Bereich von α1 = 11·10⁻⁶·K⁻¹ bis α1 = 12,5·10⁻⁶·K⁻¹ oder im Fall von Grauguss im Bereich von α1 = 9·10⁻⁶·K⁻¹ bis α1 = 10·10⁻⁶·K⁻¹ liegt, und dass der zweite Wärmeausdehnungskoeffizient im Bereich von α2 = 9·10⁻⁶·K⁻¹ bis α2 = 20·10⁻⁶·K⁻¹ liegt, insbesondere der im Bereich von α2 = 14·10⁻⁶·K⁻¹ bis α2 = 17·10⁻⁶·K⁻¹ liegt.

Insbesondere weist das erste Bauteil einen ersten Wärmeausdehnungskoeffizienten auf, der mindestens um 3% seines Wertes verschieden zu dem zweiten Wärmeausdehnungskoeffizienten ist, insbesondere maximal um 50% seines Wertes verschieden zu dem zweiten Wärmeausdehnungskoeffizienten ist.

Insbesondere weist das dritte Bauteil einen dritten Wärmeausdehnungskoeffizienten auf, der bevorzugt gleich oder ähnlich dem zweiten Wärmeausdehnungskoeffizienten ist. Insbesondere ist der dritte Wärmeausdehnungskoeffizient des dritten Bauteils maximal um 15% seines Wertes verschieden zu dem zweiten Wärmeausdehnungskoeffizienten, insbesondere maximal um 2% seines Wertes verschieden zu dem zweiten Wärmeausdehnungskoeffizienten, insbesondere gleich dem zweiten Wärmeausdehnungskoeffizienten.

Eine Ausgestaltung ist, dass das erste Bauteil und das zweite Bauteil mittels zumindest einer Passfederanordnung aneinander ansetzbar ausgebildet sind, wobei Komponenten der Passfederanordnung von einer Mitte eines der Bauteile, insbesondere des größeren der Bauteile beabstandet angeordnet sind und zumindest eines von einem Passfederspiel und einer Passfedernut-Erstreckung in Richtung von der Mitte des Bauteils weg aufweisen.

Damit kann sich bei thermischer Belastung das eine der Bauteile relativ zum anderen der beiden Bauteile symmetrisch von der Mitte aus ausdehnen.

Solche Passfederanordnungen sind insbesondere nahe dem Umfang eines der Bauteile, insbesondere des größeren der Bauteile angeordnet. Ist das Bauteil beispielsweise eine kreisförmige oder teilkreisförmige Platte, so ermöglichen ein solches Passfederspiel bzw. eine solche Passfedernut-Erstreckung eine zueinander verschiedene thermische Ausdehnung der beiden Bauteile relativ zueinander ohne dabei Spannungen, insbesondere kritische Spannungen im Bereich der Passfederanordnungen und Verschraubung aufzubauen.

Die Positionierung der Bauteile ist somit insbesondere über Passfedern realisierbar. Durch Passfedern wird eine einfache und sichere Vormontage der beiden Bauteile mittels Formschluss erreicht. Beispielsweise kann eine Montageplatte, an der das dritte Bauteil anordbar ist oder angeordnet ist, in Passfedernuten des anderen Bauteils eingehängt werden, welches zum Beispiel ein Bauteil eines Getriebegehäuses ist. Bevorzugt sind dabei die Passfedernuten in diesem anderen Bauteil ausgebildet.

Bei einer bevorzugten Einsetzrichtung wird das zweite Bauteil von oben her an bzw. in das erste Bauteil gesetzt. In diesem Fall weisen seitlich bzw. quer zur Ansetzrichtung angeordnete Passfedernuten bevorzugt Spiel in seitlicher Richtung bzw. schräg, insbesondere quer zur Einsetzrichtung auf, so dass die Passfedern im Betrieb zur Ausdehnungskompensation Spiel in schräger bzw. seitlicher Richtung in und/oder zu den Nuten des Bauteils besitzen. Entsprechend weisen in Einsetzrichtung unterseitig angeordnete Passfedernut und Passfeder Spiel insbesondere in unterseitiger Richtung auf, um ein relatives thermisches Wachstum der Bauteile zu ermöglichen. Bei einer bevorzugten Ausgestaltung mit einer horizontal verlaufenden Welle verlaufen die Passfedern und Passfedernuten entsprechend in vertikaler bzw. horizontaler Richtung.

Gemäß einer Weiterbildung sind solche Passfederanordnungen insbesondere mit jeweils einer Passfeder und einer diesen umschließenden Passfedernut ausgebildet, welche ein aneinander Ansetzen der beiden Bauteile ermöglichen, bevor diese miteinander verschraubt werden, was eine Montage vereinfacht.

Eine Ausgestaltung ist, dass eines von dem ersten Bauteil und dem zweiten Bauteil aus Baustahl oder Grauguss oder Sphäroguss ausgebildet ist und das andere von dem ersten Bauteil und dem zweiten Bauteil aus der Gruppe Edelstahl oder Edelstahlguss ausgebildet ist.

Eine Ausgestaltung ist, dass eine Durchgangsöffnung durch eines von dem ersten Bauteil und dem zweiten Bauteil führt, dass dieses eine Bauteil mittels insbesondere eines Bunds einer Buchse in Richtung des anderen Bauteils gespannt ist, wobei ein Abschnitt der Buchse in die Durchgangsöffnung zumindest hineinführt, und dass ein Außendurchmesser des in die Durchgangsöffnung hineinführenden Abschnitts der Buchse um ein Spiel kleiner ist als ein Innendurchmesser der Durchgangsöffnung.

Im Rahmen des Spiels kann eine thermische Ausgleichsbewegung der Bauteile relativ zueinander erfolgen ohne störende Spannungen aufzubauen. Zugleich ist insbesondere bei einer Anordnung mit mehreren räumlich verteilten solcher Verspannungsanordnungen auch eine Fixierung der Bauteile in den Richtungen einer Montageebene im Rahmen des Spiels realisiert.

Das Spannen des einen Bauteils erfolgt gemäß einer bevorzugten Ausgestaltung insbesondere mit einer Verschraubung durch Spannen des Bunds der Buchse in Richtung des anderen Bauteils. Insbesondere führt dabei ein Bolzen, der zumindest ein Gewinde trägt, durch die Durchgangsöffnung hindurch und zumindest in das andere Bauteil hinein. Der Bolzen ist mit dem zumindest einen Ende in oder an dem anderen Bauteil verschraubt. Der Bolzen trägt an seinem anderen Ende einen Schraubenkopf oder eine Mutter und spannt mit dem Schraubenkopf oder der Mutter die Buchse und/oder deren Bund gegen das eine Bauteil, das die Durchgangsöffnung aufweist.

Eine Ausgestaltung ist, dass das Spiel eine Ausdehnung des ersten Bauteils gegenüber dem zweiten Bauteil ohne aneinander Anliegen oder bis zu einem aneinander Spannen des ersten Bauteils und der Buchse quer zur Befestigungsrichtung des ersten Bauteils an dem zweiten Bauteil bei einer Betriebstemperatur, insbesondere bis zu -200°C / +300°C zulässt.

Eine Ausgestaltung ist, dass der in die Durchgangsöffnung hineinführende Abschnitt der Buchse von dem anderen Bauteil beabstandet ist oder gleitfähig an dem anderen Bauteil anliegt, insbesondere auch bei einer Betriebstemperatur, insbesondere bis zu -200°C / +300°C noch beabstandet ist oder gleitfähig an dem anderen Bauteil anliegt.

Es besteht somit ein Spiel längs zur Erstreckung der Buchse bzw. stirnseitig der Buchse in Befestigungsrichtung des ersten Bauteils an dem zweiten Bauteil insbesondere ohne Berührung aneinander, wobei dieses Spiel so groß ist, dass eine Ausdehnung des ersten Bauteils relativ zu einer Ausdehnung der Buchse bei der zugelassenen oder gewünschten Betriebstemperatur ohne aneinander Anliegen oder aneinander Spannen des zweiten Bauteils und der Buchse oder zumindest ohne Blockierung eines gleitfähigen aneinander Anliegens des zweiten Bauteils und der Buchse möglich ist.

Dies wird insbesondere dadurch ermöglicht, dass der in die Durchgangsöffnung hineinragende Abschnitt der Buchse eine andere Länge als die Länge der Durchgangsöffnung aufweist, und/oder dadurch ermöglicht, dass ein Wärmeausdehnungskoeffizient der Buchse gleich dem Wärmeausdehnungskoeffizienten des ersten Bauteils ist oder ähnlich, insbesondere innerhalb einer Toleranz von ±10% liegend zu dem Wärmeausdehnungskoeffizienten des ersten Bauteils ist. Insbesondere ist die Länge des Abschnitts der Buchse geringfügig größer als die Dicke des ersten Bauteils, um im Betrieb eine Relativbewegung des zweiten Bauteils und der Buchse ohne insbesondere nennenswerte Entstehung von Spannungen zu realisieren bzw. um eine thermische Ausgleichsbewegung zu realisieren.

Eine Ausgestaltung ist, dass ein Material der Buchse einen Wärmeausdehnungskoeffizienten aufweist, welches dem Wärmeausdehnungskoeffizienten des die Durchgangsöffnung umgebenden Bauteils entspricht oder ähnlich ist. Unter ähnlich wird dabei insbesondere verstanden, dass eine Abweichung der Wärmeausdehnungskoeffizienten kleiner 10%, insbesondere kleiner 5% ist. Dabei kann die Durchgangsöffnung insbesondere durch eine Komponente eines Getriebegehäuses, einen Flansch oder eine Komponente eines Verdichtergehäuses oder Expandergehäuses als ein solches Bauteil führen.

Eine bevorzugte Weiterbildung besteht darin, dass zwischen der Durchgangsöffnung und dem in die Durchgangsöffnung hineinführenden Abschnitt der Buchse zumindest ein O-Ring eingesetzt ist.

Ein solcher O-Ring unterstützt bei der Montage eine Vorzentrierung der miteinander zu verbindenden Bauteile.

Bevorzugt wird entsprechend auch ein Montageverfahren zum Montieren einer solchen Verspannungsanordnung, wobei das erste Bauteil und das zweite Bauteil aneinander gesetzt werden und in die Durchgangsöffnung die Buchse hineingeführt wird, wobei ein Bolzen, der ein Gewinde trägt, in oder relativ zu dem zweiten Bauteil befestigt wird oder ist und durch die Buchse ragt und wobei mittels eines Schraubenkopfs oder einer Mutter am Gewindebolzen ein Bund der Buchse gegen das erste Bauteil gespannt wird, wobei eine Spannkraft zum Spannen eingestellt wird, die ein Spiel oder eine gleitfähige Verbindung zumindest eines von der Buchse und dem zweiten Bauteil gegenüber dem ersten Bauteil belässt, insbesondere bei einer Betriebstemperatur von insbesondere bis zu -200°C / +300°C belässt.

Eine Verspannung erfolgt dabei insbesondere so, dass in Verspannungsrichtung eine feste Verbindung der beiden Bauteile erfolgt, deren Ausdehnung aufgrund einwirkender Wärme jedoch noch durch eine Geleitbewegung der beiden Bauteile aneinander möglich ist.

Eine besonders bevorzugte Ausgestaltung dient zur Verbindung des zweiten Bauteils, beispielsweise eines Edelstahlflansches, welcher als Rückwand eines zugelieferten Verdichtergehäuses dient, mit einem Getriebe, insbesondere Getriebegehäuse, welches das erste Bauteil aufweist oder ausbildet. Insbesondere wenn ein Verdichter mit einem solchen Verdichtergehäuse beispielsweise zur Herstellung von Säure, z.B. Terephthalsäure benötigt wird, kann ein solcher Flansch aus Edelstahl gefertigt werden, während das Getriebe oder dessen Getriebegehäuse aus einfachem Baustahl konzipiert ist. Dies bietet vorteilhaft hohe Korrosionsbeständigkeit.

Insbesondere sind zwei Bauteile mit unterschiedlichem Wärmeausdehnungskoeffizienten miteinander verbindbar, die beispielsweise keine erforderliche schweißbare Qualität aufweisen, sondern miteinander verschraubt werden. Durch die vorgeschlagene Verspannungsanordnung ist nicht nur eine feste Verbindung der beiden Bauteile möglich, sondern es besteht eine lösbare und/oder aneinander gleitfähige Verbindung, die eine relativ unterschiedliche Wärmeausdehnung ermöglicht. Insbesondere wird diese Verbindung durch eine Verschraubung mittels Distanzbuchse realisiert.

Die erfindungsgemäße Lösung wird nachfolgend anhand von Figuren erläutert. Gleiche Bezugszeichen verweisen dabei auf gleiche oder gleichwirkende Komponenten, so dass diesbezüglich auch auf die Beschreibung der anderen Figuren verwiesen wird. In den Figuren ist im Einzelnen folgendes dargestellt:
- Figur 1: zeigt in schematisiert vereinfachter Darstellung den Grundaufbau einer Verspannungsanordnung eines ersten Bauteils und eines zweiten Bauteils aneinander anhand eines Ausschnitts davon in geschnittener Ansicht,
- Figur 2: zeigt in schematisch vereinfachter Darstellung eine Draufsicht auf ein solches Bauteil an dem dadurch verdeckt dargestellten weiteren Bauteil,
- Figur 3: zeigt in schematisch vereinfachter Darstellung einen Ausschnitt aus den Figuren 1 und 2 in geschnittener Ansicht und
- Figur 4: zeigt in schematisch vereinfachter Darstellung einen weiteren Ausschnitt aus den Figuren 1 und 2 in geschnittener Ansicht.

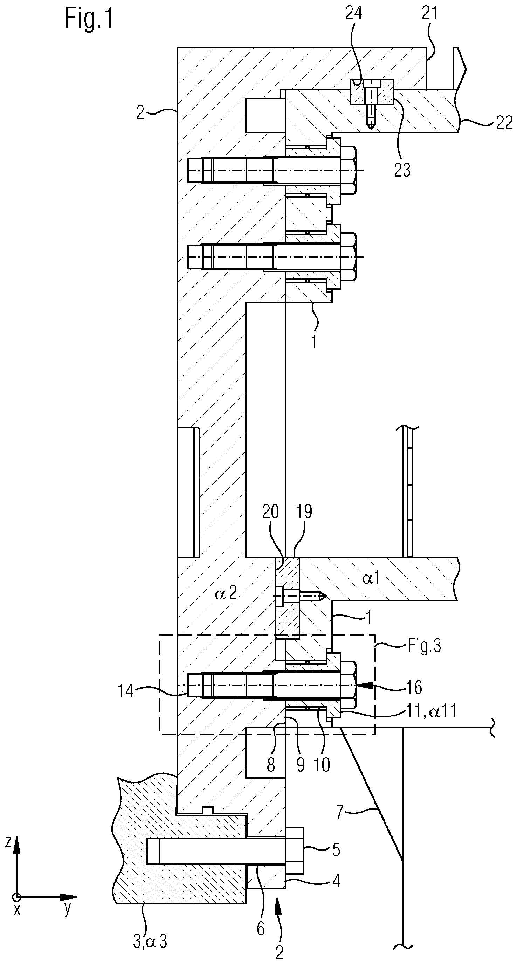

Figur 1 zeigt ein erstes Bauteil 1, das mit einer Verspannungsanordnung an einem zweiten Bauteil 2 anliegend angeschraubt ist. An dem zweiten Bauteil 2 ist an dessen dem ersten Bauteil 1 gegenüberliegenden Seite ein drittes Bauteil 3 befestigt, insbesondere angeschraubt.

Das erste Bauteil 1 ist eine Komponente eines Getriebegehäuses 7. Das zweite Bauteil 2 ist ein Flansch zur Befestigung des dritten Bauteils 3 an dem Getriebe oder dem Getriebegehäuse 7. Das dritte Bauteil 3 ist bevorzugt eine Komponente eines Verdichtergehäuses. Insbesondere sind das erste Bauteil 1 und das zweite Bauteil 2 in Form von Platten ausgebildet.

Das zweite Bauteil 2 ist in seinem Umfangsbereich, der insbesondere teilkreisförmig ausgebildet ist, als ein Flansch-Befestigungsabschnitt 4 für das dritte Bauteil 3 ausgebildet. Der Flansch-Befestigungsabschnitt 4 weist beispielsweise Durchtrittsöffnungen 6, insbesondere Bohrungen auf. Zur Befestigung des dritten Bauteils 3 dienen Befestigungselemente 5, insbesondere Schrauben, insbesondere Stiftschrauben, welche beispielsweise aus Richtung des ersten Bauteils 1 durch die Durchtrittsöffnungen 6 hindurch und in ein Gewinde im dritten Bauteil 3 hinein führen.

Bei der bevorzugten Anordnung besteht das erste Bauteil 1 aus einem einfachen Material wie Baustahl, Grauguss oder Sphäroguss mit einem ersten Wärmeausdehnungskoeffizienten α1 im Bereich von 9·10⁻⁶·K⁻¹ bis 13·10⁻⁶·K⁻¹. Das dritte Bauteil 3 besteht aus einem Material mit demgegenüber höherer Qualität wie Edelstahl oder Edelstahlguss und mit einem dritten Wärmeausdehnungskoeffizienten α3 im Bereich von 10·10⁻⁶·K⁻¹ bis 18·10⁻⁶·K⁻¹. Das zweite Bauteil 2 besteht aus einem Material, das insbesondere den Qualitätsanforderungen an das dritte Bauteil 3 genügt. Insbesondere besteht das zweite Bauteil 2 aus Edelstahl oder Edelstahlguss und hat einen zweiten Wärmeausdehnungskoeffizienten α2 im Bereich von 10·10⁻⁶·K⁻¹ bis 18·10⁻⁶·K⁻¹.

Beim Betrieb als Verdichter wirken auf das dritte Bauteil 3 und direkt oder indirekt darüber auch auf das zweite Bauteil 2 hohe Betriebstemperaturen ein. Aufgrund des unterschiedlichen ersten und zweiten Wärmeausdehnungskoeffizienten α1, α2. Dadurch dehnen sich das erste Bauteil 1 und das zweite Bauteil 2 im Betrieb unterschiedlich stark aus.

In den beispielhaften Abbildungen erstreckt sich eine Montageebene nach oben bzw. unten in z-Richtung und in dazu seitlicher x-Richtung. Entsprechend erfolgt eine Verspannung bei der beispielhaft skizzierten Ausgestaltung senkrecht zur Montageebene in y-Richtung.

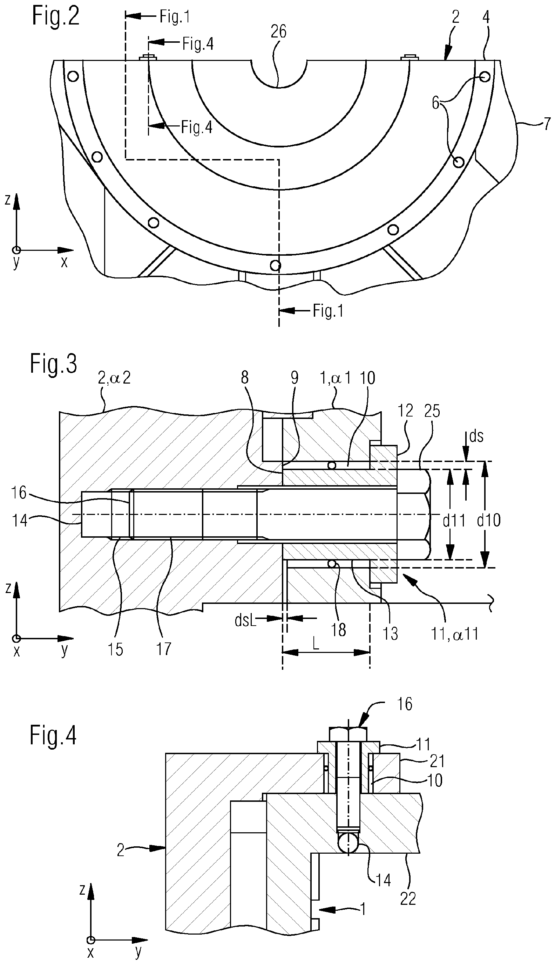

Das erste Bauteil 1 weist zumindest eine Anlagefläche 8 auf, welche sich parallel zu der Montageebene zum Montieren des zweiten Bauteils 2 erstreckt, wie insbesondere anhand Figur 1 und 3 skizziert ist. Das zweite Bauteil 2 weist eine Anlagefläche 9 auf, welche sich im Montagezustand parallel zu der damit zu verbindenden Anlagefläche 8 des ersten Bauteils 1 erstreckt. Im montierten Zustand liegen die beiden Anlageflächen 8 und 9 aneinander, wobei optional Spiel dsL zwischen diesen verbleiben kann.

Im Bereich der Anlageflächen 8 und 9 führt zumindest eine Durchgangsöffnung 10 durch das erste Bauteil 1 in Richtung des zweiten Bauteils 2. Fluchtend zu der Durchgangsöffnung 10 ist dem zweiten Bauteil 2 eine Öffnung 14 ausgebildet, die ein Einschraubgewinde 15 aufweist. In die Durchgangsöffnung 10 ist aus Richtung des ersten Bauteils 1 eine Buchse 11, insbesondere Distanzbuchse eingesetzt. Die Buchse 11 weist einen Bund 12 auf, der eine größere seitliche Erstreckung hat als ein Innendurchmesser d10 der Durchgangsöffnung 10, so dass der Bund 12 der Buchse 11 auf der Oberfläche des ersten Bauteils 1 aufliegt und die Buchse 12 nicht weiter in die Durchgangsöffnung 10 einführbar ist. Ein vorderseitiger der Abschnitt 13 der Buchse 11 führt somit nur eine begrenzte Strecke L in die Durchgangsöffnung 10 hinein. Optional kann das erste Bauteil 1 eine Ansenkung zur Aufnahme der Buchse 11 bzw. von deren Bund 12 aufweisen.

Ein Bolzen 16 führt durch die Durchgangsöffnung 10 hindurch und in die Öffnung 14 des zweiten Bauteils 2 hinein. Mit einem vorderseitigen Gewinde 17 ist der Bolzen 16 in das Einschraubgewinde 15 eingeschraubt. Rückseitig trägt der Bolzen 16 einen Schraubenkopf 25 welcher sich in seitlicher Richtung weiter erstreckt als eine Durchgangsöffnung der Buchse 11. Durch Drehen des Schraubenkopfs 25 wird der als Schraube ausgebildete Bolzen 16 in das zweite Bauteil 2 hineingeschraubt, wobei der Schraubenkopf 25 die Buchse 11 gegen das erste Bauteil 1 spannt.

Optional kann auch eine Buchse ohne Bund verwendet werden, wobei dann eine spezielle Schraube oder zusätzlich eine Distanzscheibe eingesetzt wird.

Die Spannkraft wird bei der Montage so weit erhöht, dass das erste Bauteil 1 und das zweite Bauteil 2 so aneinander anliegen, dass diese in der Ebene der Montageebene bzw. zwischen deren Anlageflächen 8 und 9 eine gleitfähige Verbindung auch bei Betriebstemperatur aufweisen. Mit anderen Worten können sich das erste Bauteil 1 und das zweite Bauteil 2 bei zunehmender oder abnehmender Betriebstemperatur in der Ebene der Montagefläche bzw. in x-Richtung und z-Richtung unterschiedlich stark ausdehnen, wobei deren Anlageflächen 8 und 9 dann aneinander gleiten oder sich relativ zueinander bewegen.

Ein Schraubennenndurchmesser, eine Anzahl der Schrauben und die Anzahl solcher Buchsen, insbesondere Bundbuchsen, deren Höhe und die Höhe einer Schraubenvorspannkraft wird insbesondere so gewählt, dass die am Gehäuse, insbesondere Verdichtergehäuse angreifenden Kräfte im Rahmen einer sicheren Verbindung aufgenommen werden. Insbesondere sollte sich dabei eine Ringfläche der Buchse durch die einwirkende Vorspannkraft nicht verformen, insbesondere nicht plastisch verformen.

Die Strecke L, um welche sich die Buchse 11 mit ihrem Abschnitt 13 in die Durchgangsöffnung 10 erstreckt, ist optional etwas größer als eine Stärke bzw. Dicke des ersten Bauteils 1 in Richtung des zweiten Bauteils 2. Dadurch entsteht nach dem Verspannen ein Spiel dsL zwischen dem ersten Bauteil 1 und dem zweiten Bauteil 2. Insbesondere ist das Maß bzw. die Strecke L der Buchse 11 geringfügig größer als die Dicke des ersten Bauteils 1, um nach Verschraubung der Buchse 11 auf dem ersten Bauteil 1 mittels der Schraube eine Relativbewegung der Buchse 11 und des zweiten Bauteils 2 insbesondere in Richtung der Montageebene ohne insbesondere nennenswerte Entstehung von Spannungen zu realisieren und so eine thermische Ausgleichsbewegung zu ermöglichen.

Bei der Wahl der Komponenten wird insbesondere berücksichtigt, dass die Buchse 11 beim Vorspannen kürzer wird, weshalb dieses Maß vorgehalten wird. Mit anderen Worten ist die Buchse 11 um ein solches Maß zusätzlich länger.

Beim Vorspannen wird die Gegenfläche der Buchse 11 gedrückt, ggfs. eingedrückt, was eine Querdehnung bewirkt. Insbesondere wird dies, sofern relevant, bei dem entsprechenden Spiel in seitlicher Richtung berücksichtigt.

Ein Außendurchmesser d11 der Buchse 11 ist so viel kleiner als der Innendurchmesser d10 der Durchgangsöffnung 10, dass ein dadurch zwischen dem Abschnitt 13 der Buchse 11 und der Durchgangsöffnung 10 entstehendes Spiel ds radial zur Buchse 11 ausreichend groß ist, eine thermische Ausdehnung des ersten Bauteils 1 bei dessen Erwärmung aufzunehmen. Insbesondere hat die Buchse 11 zur Durchgangsöffnung 10 deutlich Spiel zur Kompensation der thermischen Ausdehnung.

Insbesondere besitzt der Bund 12 von der Buchse 11 zum zweiten Bauteil 2 und ersten Bauteil 1 nach Verspannen aller solcher Schrauben kein bis minimales Spiel. Berücksichtigt werden dabei insbesondere Toleranzen des Maßes bzw. der Strecke L der Buchse 11 und partieller Dicken der Bauteile 1 und 2.

Ein Material der Buchse 11 ist bevorzugt so gewählt, dass das Material einen Wärmeausdehnungskoeffizienten α11 der Buchse 11 aufweist, welches dem Wärmeausdehnungskoeffizienten α1 des ersten Bauteils 1 entspricht oder ähnlich ist. Im Betrieb denen sich dadurch das erste Bauteil 1 und die Buchse 11 insbesondere in Verschraubungsrichtung bzw. y-Richtung gleichmäßig aus. Dadurch lässt ein zwischen dem ersten Bauteil 1 und dem zweiten Bauteil 2 gleitfähiges aneinander Anliegen bevorzugt auch ein entsprechend gleitfähiges aneinander Anliegen zwischen der Buchse 11 und dem zweiten Bauteil 2 erhalten.

Optional wird ein O-Ring 18 bei der Montage in den Raum zwischen dem Abschnitt 13 der Buchse 11 und der Innenwanderung der Durchgangsöffnung 10 eingesetzt. Insbesondere wird bei der Montage der Buchse 11 der O-Ring 18 auf die Buchse 11 aufgeschoben, um die Buchse 11 in der Durchgangsöffnung 10 zu zentrieren.

Eine Positionierung des zweiten Bauteils 2 in x-Richtung wird insbesondere über Passfedern realisiert. Beispielhaft ist dazu eine Passfeder 19 bzw. ein Passfederkeil an dem ersten Bauteil 1 mit einer Längserstreckung in z-Richtung ausgebildet. Die Passfeder 19 wird bei der beispielhaften Montagerichtung von oben in eine Passfedernut 20 mit entsprechender Längserstreckung in z-Richtung eingesetzt. Die Passfederanordnung hat ausreichend Spiel in y-Richtung zur im zweiten Bauteil 2 ausgebildeten Passfedernut 20, um im Betrieb ein thermisches Wachstum des zweiten Bauteils 2 relativ zum ersten Bauteil 1 zu ermöglichen.

Figur 1 zeigt einen oberseitigen Ausschnitt mit dem oder einem weiteren derartigen ersten Bauteil 1, das an dem zweiten Bauteil 2 gleitfähig anliegend verschraubt ist. Dabei ist ein außenseitiger Umfangsabschnitt 21 des zweiten Bauteils 2 vorspringend bzw. das erste Bauteil 1 seitlich, insbesondere außenseitlich umgreifend ausgebildet. Nach der Montage liegt der außenseitige Umfangsabschnitt 21 außenseitig auf dem ersten Bauteil 1 und/oder einem von diesem rückseitig wegführenden Element 22 auf.

Zur Unterstützung der Positionierung und Montage ist in dem rückseitig wegführenden Element 22 und/oder dem ersten Bauteil 1 außenseitig eine Passfeder 23 bzw. ein Passfederkeil mit einer Längserstreckung in x-Richtung ausgebildet. Die Passfeder 23 wird bei der Montage in eine Passfedernut 24 mit entsprechender Längserstreckung in x-Richtung eingesetzt. Die Passfedernut 24 ist dabei innenseitig bzw. unterseitig in dem außenseitigen Umfangsabschnitt 21 des zweiten Bauteils 2 ausgebildet. Die damit gebildete Passfederanordnung weist ausreichend Spiel in x-Richtung und optional in y-Richtung, um im Betrieb ein thermisches Wachstum des zweiten Bauteils 2 relativ zum ersten Bauteil 1 zu ermöglichen. Insbesondere ermöglicht eine solche Anordnung ein stärkeres thermisches Wachstum des zweiten Bauteils 2 relativ zum ersten Bauteil 1.

Die sichere Montage der beiden Bauteile 1 und 2 wird so mittels Formschluss durch Passfedern 19, 23 erreicht, die in Passfedernuten 20, 24 des anderen Bauteils 2 bzw. 1 eingehängt werden.

Bei einer solchen Anordnung kann sich bei thermischer Belastung das insbesondere teilkreisförmige zweite Bauteil 2 relativ zum ersten Bauteil 1 symmetrisch von der Mitte aus ausdehnen.

Figur 2 zeigt eine beispielhafte Draufsicht auf das zweite Bauteil 2, an dessen Flansch-Befestigungsabschnitt 4 im dargestellten Zustand kein drittes Bauteil 3 montiert ist. Das zweite Bauteil 2 erstreckt sich in Umfangsrichtung der Montageebene so weit, dass das erste Bauteil 1 oder die ersten Bauteile 1 vom zweiten Bauteil 2 verdeckt sind. Angerissen dargestellt ist außerdem eine Außenwand des Getriebegehäuses 7, welches je nach Ausgestaltung das erste Bauteil 1 oder die ersten Bauteile 1 aufweist oder an dem oder relativ zu dem das erste Bauteil 1 bzw. die ersten Bauteile 1 befestigt sind. Eine insbesondere halbkreisförmige Aussparung 26 dient zum Hindurchführen einer Welle, die aus dem Getriebegehäuse 7 in den Verdichter hineinführt.

Eine Schnittlinie verdeutlicht die Schnittansicht, welche in Figur 1 skizziert ist. Eine weitere Schnittlinie verdeutlicht die Schnittansicht, welche in Figur 4 skizziert ist.

Figur 4 zeigt einen Ausschnitt, welcher vom Umfangsrand des zweiten Bauteils 2 beabstandet ist und eine weitere derartige Verspannungsanordnung zur Befestigung des zweiten Bauteils 2 an dem ersten Bauteil 1 in unterseitiger Richtung und/oder entgegen der Montagerichtung aufweist. Beispielsweise sind wieder der Umfangsabschnitt 21 des zweiten Bauteils 2 und das oder ein weiteres Element 22, dass von dem oder einem weiteren ersten Bauteil 1 wegführt skizziert. Bei dieser Ausrichtung führen eine Öffnung 14 bzw. eine Durchgangsöffnung 10 in einer Richtung parallel zur Montageebene, hier beispielhaft in z-Richtung in bzw. durch das erste Bauteil 1 bzw. das zweite Bauteil 2. In der Durchgangsöffnung 10 ist ebenfalls eine Buchse 11 eingesetzt, durch die ein als Schraube ausgebildeter Bolzen 16 in ein Innengewinde der Öffnung 14 führt, um die beiden Bauteile 1 und 2 aneinander zu verspannen. Ein Spiel ist wiederum zwischen einem Außenumfang der Buchse 11 und einem Innenumfang der Durchgangsöffnung 10 ausreichend, um eine thermische Ausdehnung des insbesondere zweiten Bauteils 2 zu ermöglichen.

Zu diesem Ausführungsbeispiel ist eine Vielzahl von Modifikationen realisierbar.

Beispielsweise kann das zweite Bauteil 2 nicht nur als halbkreisförmiger Flansch ausgebildet sein, auf dem nach Montage am ersten Bauteil 1 ein zweiter halbkreisförmiger Flansch montiert wird, sondern es können auch andere räumliche Ausgestaltungen des zweiten Bauteils 2 vorgesehen sein, wie beispielsweise nicht runde oder nicht nur teilkreisförmige Bauteile. Auch muss das zweite Bauteil 2 nicht zwingend als ein plattenförmiges Bauteil ausgebildet sein, sondern kann auch teilweise rahmenförmig ausgebildet sein. Weiterhin können Befestigungsmöglichkeiten für das dritte Bauteil 3 nicht nur im skizzierten Bereich eines Randabschnitts des zweiten Bauteils 2 vorgesehen sein.

Das dargestellte erste Bauteil 1 ist insbesondere als eigenständige Komponente dargestellt, die zusammen mit dem Getriebegehäuse 7 an einer gemeinsamen Basis befestigt ist. Es kann aber auch eine einstückige Gehäusewand mit davon insbesondere vorspringenden ersten Bauteilen als Befestigungsabschnitten für das zweite Bauteil 2 ausgebildet sein. Weiterhin können je nach Ausgestaltung ein zusammenhängendes erstes Bauteil 1 mit mehreren Anlageflächen zum Anlegen an entsprechende Gegenflächen des zweiten Bauteils 2 oder mehrere eigenständige solche erste Bauteile 1 zur Montage des zweiten Bauteils 2 vorgesehen sein.

Gemäß modifizierter Ausgestaltungen können beispielsweise die Montagerichtungen vertauscht werden, insbesondere auch zweite Bauteile vorgesehen werden, welche nicht von oben nach unten sondern in einer Richtung schräg dazu bzw. seitlich dazu aneinander angesetzt und montiert werden. Es können sich auch unterschiedliche Ausrichtungen ergeben, wenn beispielsweise eine Montage des zweiten Bauteils auf einer Oberseite des ersten Bauteils vorzunehmen ist.

Bei der dargestellten Ausgestaltung ist als zweites Bauteil eine Platte mit einem Einschraubgewinde ausgeführt, wobei das erste Bauteil als Platte mit einem Durchgangsloch mit eventueller Ansenkung zur Aufnahme der Buchse ausgeführt ist. Jedoch ist auch eine umgekehrte Ausgestaltung realisierbar, bei der das Einschraubgewinde in dem ersten Bauteil und die Durchgangsöffnung in dem zweiten Bauteil ausgebildet ist. Realisierbar sind noch weitere Ausgestaltungen, bei denen Durchgangsöffnungen durch beide Bauteile hindurch führen, wobei dann eine Verschraubung auf zumindest einer Seite des Bolzens mittels einer Mutter erfolgt.
- 1: erstes Bauteil, Komponente eines Getriebegehäuses
- 2: zweites Bauteil, Flansch
- 3: drittes Bauteil, insbesondere Komponente eines Verdichtergehäuses
- 4: Flansch-Befestigungsabschnitt für drittes Bauteil
- 5: Befestigungselemente, insbesondere Schrauben für drittes Bauteil
- 6: Durchtrittsöffnungen im Flansch-Befestigungsabschnitt
- 7: Getriebegehäuse
- 8: Anlagefläche an Getriebegehäusekomponente
- 9: Anlagefläche am Flansch
- 10: Durchgangsöffnung
- 11: Buchse, insbesondere Distanzbuchse
- 12: Bund der Buchse
- 13: Abschnitt der Buchse, in die Durchgangsöffnung hineinführend
- 14: Öffnung
- 15: Einschraubgewinde
- 16: Bolzen
- 17: Gewinde
- 18: O-Ring
- 19: Passfeder, insbesondere Passfederkeil
- 20: Passfedernut
- 21: Umfangsabschnitt des zweiten Bauteils
- 22: vom ersten Bauteil wegführendes Element
- 23: Passfeder, insbesondere Passfederkeil
- 24: Passfedernut
- 25: Schraubenkopf
- 26: Aussparung
- d10: Innendurchmesser der Durchgangsöffnung
- d11: Außendurchmesser der Buchse
- ds: Spiel radial zur Buchse
- dsL: Spiel stirnseitig der Buchse
- L: Strecke, welche die Buchse in 10 hineinführt
- x, y, z: Raumkoordinaten
- α1: erster Wärmeausdehnungskoeffizient
- α2: zweiter Wärmeausdehnungskoeffizient
- α3: dritter Wärmeausdehnungskoeffizient
- α11: Wärmeausdehnungskoeffizient der Buchse

## Patentansprüche

1. Verspannungsanordnung eines ersten Bauteils (1) und eines zweiten Bauteils (2) aneinander, wobei eine Anlagefläche (8) des ersten Bauteils (1) an einer Anlagefläche (9) des zweiten Bauteils (2) anliegt,
wobei das erste Bauteil (1) einen ersten Wärmeausdehnungskoeffizienten (α1) und das zweite Bauteil (2) einen zweiten Wärmeausdehnungskoeffizienten (α2) aufweisen, wobei der erste Wärmeausdehnungskoeffizient (α1) und der zweite Wärmeausdehnungskoeffizient (α2) zueinander verschieden sind und
wobei die Anlageflächen (8, 9) des ersten Bauteils (1) und des zweiten Bauteils (2) im montierten Zustand gleitfähig aneinander anliegen,
**dadurch gekennzeichnet,**
**dass** das erste Bauteil (1) eine Komponente eines Getriebegehäuses (7) ist und das zweite Bauteil (2) ein Flansch zur Befestigung einer Komponente eines Verdichtergehäuses oder Expandergehäuses als ein drittes Bauteil (3) ist.

2. Verspannungsanordnung nach Anspruch 1 ,
**dadurch gekennzeichnet,**
**dass** ein drittes / das dritte Bauteil (3), das am zweiten Bauteil (2) befestigt oder befestigbar ist, einen dritten Wärmeausdehnungskoeffizienten (α3) aufweist, der im Bereich von α3 = 9·10⁻⁶·K⁻¹ bis α3 = 20·10⁻⁶·K⁻¹ liegt, insbesondere im Bereich von α3 = 14·10⁻⁶·K⁻¹ bis α3 = 17·10⁻⁶·K⁻¹ liegt.

3. Verspannungsanordnung nach einem vorstehenden Anspruch,
**dadurch gekennzeichnet,**
**dass** das der erste Wärmeausdehnungskoeffizient (α1) im Bereich von α1 = 8·10⁻⁶·K⁻¹ bis α1 = 13·10⁻⁶·K⁻¹ liegt, insbesondere der im Bereich von α1 = 11·10⁻⁶·K⁻¹ bis α1 = 12,5·10⁻⁶·K⁻¹ oder im Fall von Grauguss im Bereich von α1 = 9·10⁻⁶·K⁻¹ bis α1 = 10·10⁻⁶·K⁻¹ liegt, und dass der zweite Wärmeausdehnungskoeffizient (α2) im Bereich von α2 = 9·10⁻⁶·K⁻¹ bis α2 = 20·10⁻⁶·K⁻¹ liegt, insbesondere der im Bereich von α2 = 14·10⁻⁶·K⁻¹ bis α2 = 17·10⁻⁶·K⁻¹ liegt.

4. Verspannungsanordnung nach einem vorstehenden Anspruch,
**dadurch gekennzeichnet,**
**dass** das erste Bauteil (1) und das zweite Bauteil (2) mittels zumindest einer Passfederanordnung aneinander ansetzbar ausgebildet sind, wobei Komponenten der Passfederanordnung von einer Mitte eines der Bauteile (2), insbesondere des größeren der Bauteile (2) beabstandet angeordnet sind und zumindest eines von einem Passfederspiel und einer Passfedernut-Erstreckung in Richtung von der Mitte des Bauteils (2) weg aufweisen.

5. Verspannungsanordnung nach einem vorstehenden Anspruch,
**dadurch gekennzeichnet,**
**dass** eines von dem ersten Bauteil (1) und dem zweiten Bauteil aus Baustahl oder Grauguss oder Sphäroguss ausgebildet ist und das andere von dem ersten Bauteil und dem zweiten Bauteil (2) aus der Gruppe Edelstahl oder Edelstahlguss ausgebildet ist.

6. Verspannungsanordnung nach einem vorstehenden Anspruch,
**dadurch gekennzeichnet,**
**dass** eine Durchgangsöffnung (10) durch eines von dem ersten Bauteil (1) und dem zweiten Bauteil (2) führt,
**dass** dieses eine Bauteil (1) mittels insbesondere eines Bunds (12) einer Buchse (11) in Richtung des anderen Bauteils (2) gespannt ist, wobei ein Abschnitt (13) der Buchse (11) in die Durchgangsöffnung (10) zumindest hineinführt, und
**dass** ein Außendurchmesser (d11) des in die Durchgangsöffnung (10) hineinführenden Abschnitts der Buchse (11) um ein Spiel (ds) kleiner ist als ein Innendurchmesser (d10) der Durchgangsöffnung (10).

7. Verspannungsanordnung nach Anspruch 6,
**dadurch gekennzeichnet,**
**dass** das Spiel (ds) eine Ausdehnung des ersten Bauteils (1) gegenüber dem zweiten Bauteil (2) ohne aneinander Anliegen oder bis zu einem aneinander Spannen des ersten Bauteils (1) und der Buchse quer zur Befestigungsrichtung des ersten Bauteils (1) an dem zweiten Bauteil (2) bei einer Betriebstemperatur, insbesondere bis zu -200°C / +300°C zulässt.

8. Verspannungsanordnung nach Anspruch 6 oder 7,
**dadurch gekennzeichnet,**
**dass** der in die Durchgangsöffnung (10) hineinführende Abschnitt der Buchse (11) von dem anderen Bauteil (2) beabstandet ist oder gleitfähig an dem anderen Bauteil (2) anliegt, insbesondere auch bei einer Betriebstemperatur, insbesondere bis zu -200°C / +300°C noch beabstandet ist oder gleitfähig an dem anderen Bauteil (2) anliegt.

9. Verspannungsanordnung nach einem der Ansprüche 6 bis 8,
**dadurch gekennzeichnet,**
**dass** ein Material der Buchse (11) einen Wärmeausdehnungskoeffizienten (α11) aufweist, welches dem Wärmeausdehnungskoeffizienten (α1) des die Durchgangsöffnung (10) umgebenden Bauteils (1) entspricht oder ähnlich ist.

10. Montageverfahren zum Montieren einer Verspannungsanordnung nach einem der Ansprüche 6 bis 9,
**dadurch gekennzeichnet,**
**dass** das erste Bauteil (1) und das zweite Bauteil (2) aneinander gesetzt werden und in die Durchgangsöffnung (10) die Buchse (11) hineingeführt wird, wobei ein Bolzen (16), der ein Gewinde (17) trägt, in oder relativ zu dem zweiten Bauteil (2) befestigt wird oder ist und durch die Buchse (11) ragt und wobei mittels eines Schraubenkopfs (25) oder einer Mutter am Gewinde ein Bund (12) der Buchse (11) gegen das erste Bauteil (1) gespannt wird, wobei eine Spannkraft zum Spannen eingestellt wird, die ein Spiel (dsL) oder eine gleitfähige Verbindung zumindest eines von der Buchse (11) und dem zweiten Bauteil (2) gegenüber dem ersten Bauteil belässt, insbesondere bei einer Betriebstemperatur von insbesondere bis zu -200°C / +300°C belässt.

## Claims

1. Bracing arrangement for bracing a first structural part (1) and a second structural part (2) against each other, wherein a bearing surface (8) of the first structural part (1) bears against a bearing surface (9) of the second structural part (2), wherein the first structural part (1) has a first coefficient of thermal expansion (α1) and the second structural part (2) has a second coefficient of thermal expansion (α2), wherein the first coefficient of thermal expansion (α1) is different from the second coefficient of thermal expansion (α2), and
wherein the bearing surfaces (8, 9) of the first structural part (1) and of the second structural part (2), in the assembled state, bear against each other so as to be able to slide,
**characterized**
**in that** the first structural part (1) is a component of a transmission housing (7) and the second structural part (2) is a flange for fastening a component of a compressor housing or expander housing as a third structural part (3).

2. Bracing arrangement according to Claim 1,
**characterized**
**in that** a third/the third structural part (3), which is fastened or fastenable to the second structural part (2), has a third coefficient of thermal expansion (α3) which lies in the range of α3 = 9·10⁻⁶·K⁻¹ to α3 = 20·10⁻⁶·K⁻¹, in particular lies in the range of α3 = 14·10⁻⁶·K⁻¹ to α3 = 17·10⁻⁶·K⁻¹.

3. Bracing arrangement according to either of the preceding claims,
**characterized**
**in that** the first coefficient of thermal expansion (α1) lies in the range of α1 = 8·10⁻⁶·K⁻¹ to α1 = 13·10⁻⁶·K⁻¹, in particular lies in the range of α1 = 11·10⁻⁶·K⁻¹ to α1 = 12.5·10⁻⁶·K⁻¹ or, in the case of grey cast iron, lies in the range of α1 = 9·10⁻⁶·K⁻¹ to α1 = 10·10⁻⁶·K⁻¹, and in that the second coefficient of thermal expansion (α2) lies in the range of α2 = 9·10⁻⁶·K⁻¹ to α2 = 20·10⁻⁶·K⁻¹, in particular lies in the range of α2 = 14 ·10⁻⁶·K⁻¹ to α2 = 17·10⁻⁶·K⁻¹.

4. Bracing arrangement according to one of the preceding claims,
**characterized**
**in that** the first structural part (1) and the second structural part (2) are configured so as to be able to be attached to each other by means of at least one feather key arrangement, wherein components of the feather key arrangement are arranged so as to be spaced apart from a centre of one of the structural parts (2), in particular of the larger one of the structural parts (2), and have at least one of a feather key play and a feather key groove extent, in the direction away from the centre of the structural part (2).

5. Bracing arrangement according to one of the preceding claims,
**characterized**
**in that** one structural part from the first structural part (1) and the second structural part is formed of structural steel or grey cast iron or spheroidal graphite iron and the other structural part from the first structural part and the second structural part (2) is formed of high-grade steel or cast stainless steel.

6. Bracing arrangement according to one of the preceding claims,
**characterized**
**in that** a through-opening (10) leads through one of the first structural part (1) and the second structural part (2),
**in that** said one structural part (1) is clamped in the direction of the other structural part (2) by means in particular of a collar (12) of a bushing (11), wherein a portion (13) of the bushing (11) at least leads into the through-opening (10), and
**in that** an outer diameter (d11) of that portion of the bushing (11) which leads into the through-opening (10) is smaller than an inner diameter (d10) of the through-opening (10) by a play (ds).

7. Bracing arrangement according to Claim 6,
**characterized**
**in that** the play (ds) allows an expansion of the first structural part (1) in relation to the second structural part (2), with the first structural part (1) and the bushing not bearing against each other, or said expansion occurs until the first structural part (1) and the bushing are clamped against each other transversely with respect to the direction of fastening of the first structural part (1) to the second structural part (2), at an operating temperature, in particular up to -200°C / +300°C.

8. Bracing arrangement according to Claim 6 or 7,
**characterized**
**in that** that portion of the bushing (11) which leads into the through-opening (10) is spaced apart from the other structural part (2) or bears against the other structural part (2) so as to be able to slide, in particular is spaced apart from or bears against the other structural part (2) so as to be able to slide even at an operating temperature, in particular up to -200°C / +300°C.

9. Bracing arrangement according to one of Claims 6 to 8,
**characterized**
**in that** a material of the bushing (11) has a coefficient of thermal expansion (α11) which corresponds to, or is similar to, the coefficient of thermal expansion (α1) of the structural part (1) surrounding the through-opening (10).

10. Assembly method for assembling a bracing arrangement according to one of Claims 6 to 9,
**characterized**
**in that** the first structural part (1) and the second structural part (2) are placed against each other, and the bushing (11) is led into the through-opening (10), wherein a bolt (16) which bears a thread (17) is or has been fastened in or relative to the second structural part (2) and protrudes through the bushing (11) and wherein a collar (12) of the bushing (11) is clamped against the first structural part (1) by means of a screw head (25) or a nut on the thread, wherein, for clamping purposes, a clamping force is set which leaves a play (dsL) or a slidable connection of at least one of the bushing (11) and the second structural part (2) in relation to the first structural part (1), in particular at an operating temperature of in particular up to -200°C / +300°C.

## Revendications

1. Dispositif de serrage d'un premier composant (1) et d'un deuxième composant (2) l'un à l'autre, une surface d'appui (8) du premier composant (1) s'appliquant contre une surface d'appui (9) du deuxième composant (2),
le premier composant (1) présentant un premier coefficient de dilatation thermique (α1) et le deuxième composant (2) présentant un deuxième coefficient de dilatation thermique (α2), le premier coefficient de dilatation thermique (α1) et le deuxième coefficient de dilatation thermique (α2) étant différents l'un de l'autre et
en ce que les surfaces d'appui (8, 9) du premier composant (1) et du deuxième composant (2) s'appliquent dans l'état monté de manière à pouvoir coulisser l'une contre l'autre,
**caractérisé en ce que**
le premier composant (1) est un constituant d'un carter de transmission (7) et le deuxième composant (2) est une bride pour la fixation d'un constituant d'un carter de compresseur ou d'un carter de détendeur en tant que troisième composant (3).

2. Dispositif de serrage selon la revendication 1,
**caractérisé en ce que**
un troisième/le troisième composant (3) qui est ou peut être fixé au deuxième composant (2) présente un troisième coefficient de dilatation thermique (α3) qui est situé dans une plage de α3 = 9·10⁻⁶·K⁻¹ à α3 = 20·10⁻⁶·K⁻¹, en particulier dans une plage de α3 = 14·10⁻⁶·K⁻¹ à α3 = 17·10⁻⁶·K⁻¹.

3. Dispositif de serrage selon l'une des revendications précédentes,
**caractérisé en ce que**
le premier coefficient de dilatation thermique (α1) est situé dans la plage de α1 = 8·10⁻⁶·K⁻¹ à α1 = 13·10⁻⁶·K⁻¹, en particulier dans la plage de al = 11·10⁻⁶·K⁻¹ à α1 = 12,5·10^{-6·}K⁻¹ ou, dans le cas de fonte grise, dans la plage de al = 9·10⁻⁶·K⁻¹ à α1 = 10·10⁻⁶·K⁻¹, et **en ce que** le deuxième coefficient de dilatation thermique (α2) est situé dans la plage de α2 = 9·10⁻⁶·K⁻¹ à α2 = 20·10⁻⁶·K⁻¹, en particulier dans la plage de α2 = 14·10⁻⁶·K⁻¹ à α2 = 17·10⁻⁶·K⁻¹.

4. Dispositif de serrage selon l'une des revendications précédentes,
**caractérisé en ce que**
le premier composant (1) et le deuxième composant (2) sont réalisés de manière à pouvoir être appliqués l'un contre l'autre au moyen d'au moins un agencement à ressort d'ajustement, des constituants de l'agencement de ressort d'ajustement étant disposés à distance d'un centre de l'un des composants (2), en particulier du plus gros des composants (2), et présentant un jeu de ressort d'ajustement et/ou une étendue de rainure de ressort d'ajustement dans la direction s'écartant du centre du composant (2).

5. Dispositif de serrage selon l'une des revendications précédentes,
**caractérisé en ce que**
l'un parmi le premier composant (1) et le deuxième composant est réalisé en acier de construction ou en fonte grise ou en fonte à graphite sphéroïdal et l'autre parmi le premier composant et le deuxième composant (2) est réalisé en un matériau du groupe comprenant l'acier inoxydable ou la fonte inoxydable.

6. Dispositif de serrage selon l'une des revendications précédentes,
**caractérisé en ce**
**qu'**une ouverture de passage (10) conduit à travers l'un parmi le premier composant (1) et le deuxième composant (2),
en ce que ce composant (1) est serré dans la direction de l'autre composant (2) au moyen de notamment un épaulement (12) d'une douille (11), une portion (13) de la douille (11) pénétrant au moins dans l'ouverture de passage (10), et
en ce qu'un diamètre extérieur (d11) de la portion de la douille (11) pénétrant dans l'ouverture de passage (10) est inférieure d'un jeu (ds) à un diamètre intérieur (d10) de l'ouverture de passage (10) .

7. Dispositif de serrage selon la revendication 6,
**caractérisé en ce que**
le jeu (ds) permet une dilatation du premier composant (1) par rapport au deuxième composant (2) sans application l'un contre l'autre ou jusqu'à un serrage l'un contre l'autre du premier composant (1) et de la douille transversalement à la direction de fixation du premier composant (1) contre le deuxième composant (2) à une température de fonctionnement, en particulier jusqu'à -200°C/+300°C.

8. Dispositif de serrage selon la revendication 6 ou 7,
**caractérisé en ce que**
la portion de la douille (11) pénétrant dans l'ouverture de passage (10) est espacée de l'autre composant (2) ou s'applique de manière à pouvoir glisser contre l'autre composant (2), en particulier également à une température de fonctionnement, en particulier jusqu'à -200°C / +300°C est encore espacée ou s'applique encore de manière à pouvoir glisser contre l'autre composant (2) .

9. Dispositif de serrage selon l'une quelconque des revendications 6 à 8,
**caractérisé en ce**
**qu'**un matériau de la douille (11) présente un coefficient de dilatation thermique (α11) qui correspond au ou qui est similaire au coefficient de dilatation thermique (α1) du composant (1) entourant l'ouverture de passage (10).

10. Procédé de montage pour le montage d'un dispositif de serrage selon l'une quelconque des revendications 6 à 9,
**caractérisé en ce que**
le premier composant (1) et le deuxième composant (2) sont placés l'un contre l'autre et la douille (11) est introduite dans l'ouverture de passage (10), un boulon (16) qui porte un filetage (17) étant fixé dans le, ou par rapport au, deuxième composant (2) et pénétrant à travers la douille (11) et un épaulement (12) de la douille (11) étant serré contre le premier composant (1) au moyen d'une tête de vis (25) ou d'un écrou sur le filetage, une force de serrage pour le serrage étant ajustée, laquelle permet un jeu (dsL) ou une liaison de glissement de la douille (11) et/ou du deuxième composant (2) par rapport au premier composant, en particulier à une température de fonctionnement notamment de jusqu'à -200°C / +300°C.
